# EUROPÄISCHE PATENTSCHRIFT

(11) **EP 2 654 146 B1**
(45) Veröffentlichungstag und Bekanntmachung des Hinweises auf die Patenterteilung: **16.03.2016**
(21) Anmeldenummer: 13160809.3
(22) Anmeldetag: 25.03.2013
(51) Int. Cl.: H02B 1/052

(54) **Tragschienenadapter**
Support rail adapter
Adaptateur pour rails porteurs

(30) Priorität: 20.04.2012 DE 102012206600
(43) Veröffentlichungstag der Anmeldung: 23.10.2013
(73) Patentinhaber: Wöhner GmbH & Co. KG Elektrotechnische Systeme, 96472 Rödental (DE)
(72) Erfinder: Büttner, Alex, 96472 Rödental (DE); Curth, Christopher, 96465 Neustadt (DE)
(74) Vertreter: Isarpatent

(56) Entgegenhaltungen:
- WO-A1-2004/073127
- DE-A1- 4 421 267
- DE-A1- 10 061 940
- FR-A1- 2 830 677
- US-B1- 6 563 697

## Beschreibung

Die Erfindung betrifft einen Tragschienenadapter für ein elektrisches Installationsgerät.

Eine Tragschiene ist eine Profilschiene aus Metall, die zur Befestigung von Bauteilen bzw. elektrischen Installationsgeräten in Verteilerkästen, Schaltschränken, Anschlusskästen und dergleichen verwendet wird. Über eine Tragschiene können unterschiedliche elektrische Installationsgeräte, beispielsweise Stromschalter, Sicherungsautomaten, Reihenklemmen, Relais oder Zeitschaltuhren aufgeschoben oder von vorne aufgesteckt und arretiert werden. Eine Tragschiene mit U-förmigem bzw. einem hutähnlichen Profil wird auch als Hutschiene bezeichnet. Elektrische Installationsgeräte mit einer Befestigungsmöglichkeit auf eine Tragschiene haben üblicherweise geräteseitig Zu- und Abgangsklemmen zur Aufnahme von elektrischen Leitungen.

Aus der DE 44 21 267 A1 ist ein etwa quaderförmiges Interface-Modul bekannt, das aus einem aus Kunststoff bestehenden Gehäuseteil und einem Einschubteil aufgebaut ist. Das Gehäuseteil ist auf der Unterseite mit Aufrastmitteln, die aus einer Nase und einem Schieber bestehen, ausgerüstet und kann damit auf eine Halteschiene in Form einer Hutschiene aufgerastet werden. Auf der Oberseite des Modulgehäuses ist eine Modulschiene einstückig angeformt, die in ihrer Form und Abmessung im Wesentlichen einer Halteschiene entspricht. An den entgegengesetzten Enden des Moduls sind Schraubklemmen angeordnet, an die die Busleitung einer Steuereinrichtung anschließbar ist.

Es ist eine Aufgabe der vorliegenden Erfindung, einen Tragschienenadapter für ein elektrisches Installationsgerät zu schaffen, welcher einen gefahrlosen Gerätewechsel unter Spannung erlaubt.

Diese Aufgabe wird erfindungsgemäß durch einen Tragschienenadapter mit den in Patentanspruch 1 angegebenen Merkmalen gelöst.

Die Erfindung schafft demnach einen Tragschienenadapter für ein elektrisches Installationsgerät,
wobei der Tragschienenadapter ein schmales Gehäuse aufweist, an dessen Unterseite ein Rastbauelement angebracht ist, welches mittels eines Ver- und Entriegelungsmechanismus zum Anbringen des Tragschienenadapters an eine Tragschiene oder zum Entfernen des Tragschienenadapters von der Tragschiene betätigbar ist und an dessen Oberseite innen liegende Kontakteinrichtungen zum Anschluss des elektrischen Installationsgerätes vorgesehen sind, welche über in dem Gehäuse befindliche Innenleiter mit Anschlussklemmen verbunden sind, die an einer Stirnseite des Gehäuses zum Anschluss von elektrischen Leitungen vorgesehen sind, wobei der Ver- und Entriegelungsmechanismus an der Stirnseite des Gehäuses unterhalb der Anschlussklemmen für die elektrischen Leitungen angebracht ist und nur nach Entfernen der elektrischen Leitungen betätigbar ist.

Mögliche Ausführungsformen des erfindungsgemäßen Tragschienenadapters sind in den Unteransprüchen angegeben.

Bei einer möglichen Ausführungsform des erfindungsgemäßen Tragschienenadapters sind die Kontakteinrichtungen zum Anschluss des elektrischen Installationsgerätes Steckkontakte.

Bei einer möglichen Ausführungsform des erfindungsgemäßen Tragschienenadapters sind die Kontakteinrichtungen zum Anschluss des Installationsgerätes an der Oberseite des schmalbandigen Gehäuses linear übereinander angeordnet.

Bei einer möglichen Ausführungsform des erfindungsgemäßen Tragschienenadapters sind die stirnseitig angeordneten Anschlussklemmen zum Anschluss von drei spannungsführenden Phasenleitungen vorgesehen.

Bei einer möglichen Ausführungsform des erfindungsgemäßen Tragschienenadapters ist an einem Gehäuse ein hammerkopfförmiger Haltesteg zum Halten des Ver- und Entriegelungsmechanismus angeformt.

Bei einer möglichen Ausführungsform des erfindungsgemäßen Tragschienenadapters ist der Ver- und Entriegelungsmechanismus mit einer Haltekontur versehen, die unter den Haltesteg des Gehäuses geschoben ist.

Im Weiteren werden mögliche Ausführungsformen des erfindungsgemäßen Tragschienenadapters für ein elektrisches Installationsgerät unter Bezugnahme auf die beigefügten Figuren näher erläutert.

Es zeigen:
- Fig. 1: eine Perspektivansicht eines Tragschienenadapters gemäß einer Ausführungsform der Erfindung von oben;
- Fig. 2: eine Draufsicht auf den Tragschienenadapter gemäß Fig. 1;
- Fig. 3: eine Schnittansicht des Tragschienenadapters gemäß Fig. 2;
- Fig. 4: eine Perspektivansicht eines Tragschienenadapters gemäß einer Ausführungsform der Erfindung von unten.

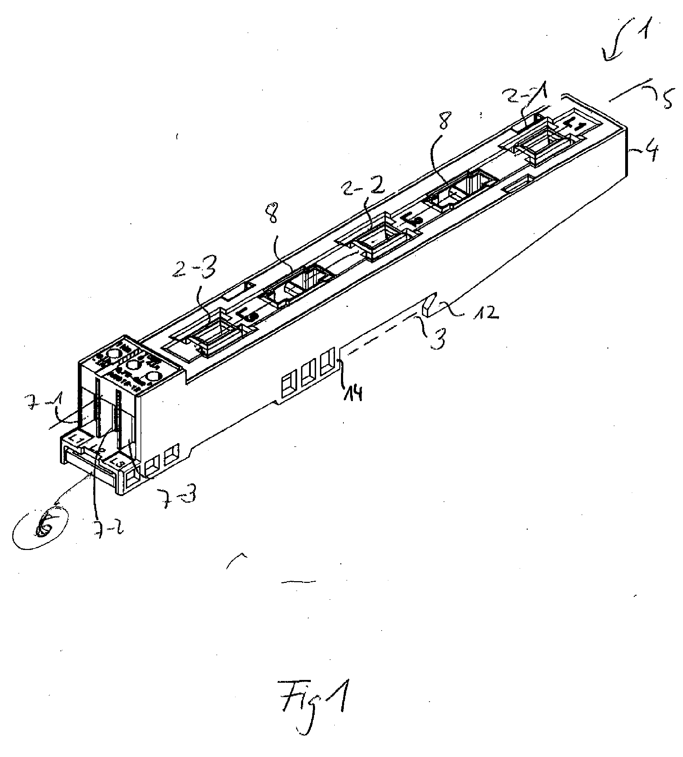

Fig. 1 zeigt eine Perspektivansicht eines Tragschienenadapters 1 gemäß einer Ausführungsform der Erfindung. Der Tragschienenadapter 1 weist in dem in Fig. 1 dargestellten Ausführungsbeispiel drei Kontakteinrichtungen 2-1, 2-2, 2-3 auf, an denen mindestens ein Installationsgerät anschließbar ist. Bei einer möglichen Ausführungsform sind die Kontakteinrichtungen 2-i zum Anschluss des elektrischen Installationsgerätes Steckkontakte, d.h. ein Anschlussdraht des Installationsgerätes kann in die Kontakteinrichtungen 2-i eingeführt werden und wird anschließend mechanisch gehalten. Der Tragschienenadapter 1 weist ein schmales Gehäuse 4 auf, wobei die Kontakteinrichtungen 2-i, wie in Fig. 1 dargestellt, an der Oberseite des Gehäuses 4 liegen und vorzugsweise in dem Gehäuse 4 integriert sind bzw. darin liegen. Die Kontakteinrichtungen 2-i bilden vorzugsweise Steckkontaktierungen, die derart in dem Gehäuse 4 angeordnet sind, dass sie beim Handhaben des Tragschienenadapters 1 nicht berührt werden können. An der Unterseite des Gehäuses 4 ist das Gehäuse derart geformt, dass es auf eine gestrichelt angedeutete Tragschiene 3 montiert bzw. aufgerastet werden kann. Das Gehäuse 4 des erfindungsgemäßen Tragschienenadapters 1 ist vorzugsweise in Schmalbauweise ausgebildet, wobei die Kontakteinrichtungen 2-i vorzugsweise linear übereinander entlang einer Längsachse 5 angeordnet sind. Der erfindungsgemäße Tragschienenadapter 1 ist symmetrisch zu der Längsachse 5 ausgebildet, wie in Fig. 1 dargestellt. An der Unterseite des Gehäuses 5 ist stirnseitig ein Rastbauelement 6 angebracht, welches mittels eines Ver- und Entriegelungsmechanismus zum Anbringen des Tragschienenadapters 1 an die Tragschiene 3 oder zum Entfernen des Tragschienenadapters 1 von der Tragschiene 3 betätigbar ist. Bei dem in Fig. 1 dargestellten Ausführungsbeispiel weist der Tragschienenadapter 1 ferner drei Anschlussklemmen 7-1, 7-2, 7-3 auf, die zum Anschluss von drei spannungsführenden Phasenleitungen L1, L2, L3 vorgesehen sind. Wie man in Fig. 1 erkennen kann, ist das Rastbauelement 6, das mittels eines Ver- und Entriegelungsmechanismus zum Anbringen des Tragschienenadapters 1 an die Tragschiene 3 bzw. zum Entfernen des Tragschienenadapters 1 von der Tragschiene 3 manuell betätigbar ist, unterhalb der Anschlussklemmen 7-i für die elektrischen Leitungen angebracht und ist daher nur nach Entfernen der elektrischen Leitungen betätigbar. Der Ver- und Entriegelungsmechanismus kann im montierten Zustand jeweils an Gehäusewandungen 14 des Gehäuses 4 gehalten werden.

Die Kontakteinrichtungen 2-i des Tragschienenadapters 1 sind, wie in Fig. 1 dargestellt, linear übereinander angeordnet, sodass das Gehäuse 5 schmal ausgebildet sein kann und wenig Platz auf einer Tragschiene 3 einnimmt. Der erfindungsgemäße Tragschienenadapter 1 kann somit platzsparend auf einer Trag- bzw. Hutschiene angebracht werden. Darüber hinaus sind die drei Kontakteinrichtungen 2-1, 2-2, 2-3 an der Oberseite des Gehäuses 4 vorzugsweise symmetrisch angeordnet, d.h. der Abstand zwischen der ersten Kontakteinrichtung 2-1 und der zweiten Kontakteinrichtung 2-2 ist vorzugsweise genauso groß wie der Abstand zwischen der zweiten Kontakteinrichtung 2-2 und der dritten Kontakteinrichtung 2-3. Bei dem in Fig. 1 dargestellten Ausführungsbeispiel können zwischen zwei Kontakteinrichtungen 2-i zusätzlich Befestigungseinrichtungen 8 zum Befestigen eines Installationsgerätes an den Tragschienenadapter 1 vorgesehen sein. Bei dem in Fig. 1 dargestellten Ausführungsbeispiel sind zwei Befestigungseinrichtungen 8 vorgesehen. Die Befestigungseinrichtungen 8 sind dabei derart geformt, dass beispielsweise ein Rastelement eines zugeordneten Installationsgerätes darin aufgenommen werden kann. Mithilfe des erfindungsgemäßen Tragschienenadapters 1 ist es möglich, ein Installationsgerät bei einem Defekt problemlos zu entfernen. Hierzu müssen die spannungsführenden Zuleitungen, die an den Anschlussklemmen 7-1, 7-2, 7-3 angeschlossen sind, nicht entfernt werden. Das Installationsgerät kann mechanisch entriegelt und abgezogen werden. Die Neuinstallation eines Installationsgerätes erfolgt dann in umgekehrter Reihenfolge.

Auch während des Gerätewechsels des Installationsgerätes bleibt der Tragschienenadapter 1 aufgrund seiner besonders ausgeformten Stecköffnungen bzw. Kontakteinrichtungen 2-i berührungsgeschützt und stellt keine Gefahr für den Bediener dar.

Ein Abnehmen des Tragschienenadapters 1 von der Tragschiene 3 geschieht mithilfe des mittels eines Ver- und Entriegelungsmechanismus betätigbaren Rastelementes 6, wie es in Fig. 1 dargestellt ist. Dieses Rastelement 6 ist bewusst an der Stirnseite unten an dem Tragschienenadapter 1 angeordnet, sodass die darüberliegenden elektrischen Leitungen durch einen Bediener erst entfernt werden müssen, um an den Ver- bzw. Entriegelungsmechanismus zu gelangen.

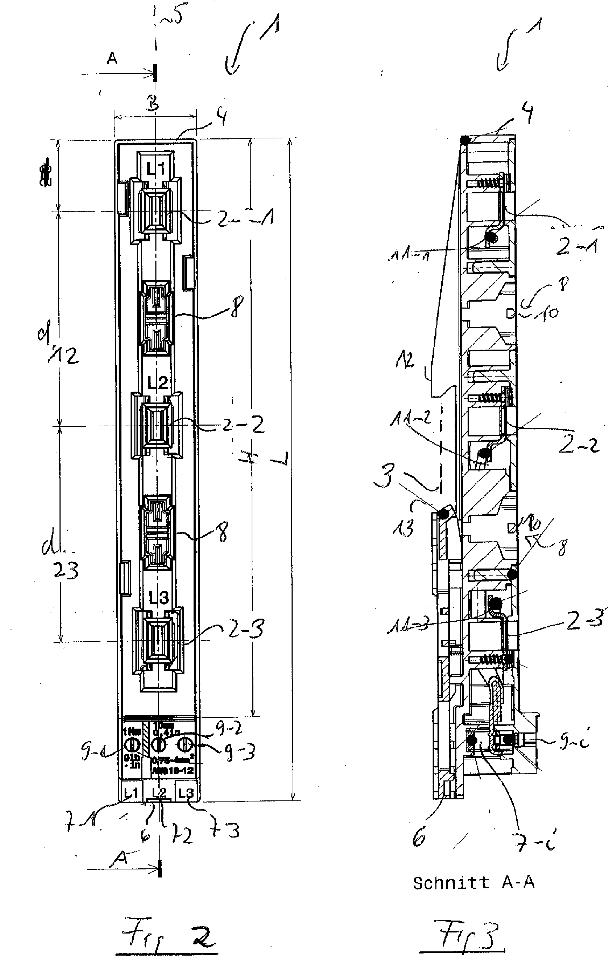

Fig. 2 zeigt eine Draufsicht auf den in Fig. 1 perspektivisch dargestellten Tragschienenadapter 1. Der Abstand d₁₂ zwischen der ersten Kontakteinrichtung 2-1 und der zweiten Kontakteinrichtung 2-2 ist vorzugsweise genauso groß wie der Abstand d₂₃ zwischen der zweiten Kontakteinrichtung 2-2 und der dritten Kontakteinrichtung 2-3 bei dem in Fig. 2 dargestellten Ausführungsbeispiel. Das Gehäuse 4 des Tragschienenadapters 1 weist eine Gesamtlänge L von beispielsweise 185 mm auf. Die Abstände d zwischen den Kontakteinrichtungen 2-i betragen beispielsweise 60 mm. Die Breite B des Gehäuses 4 beträgt beispielsweise 22,5 mm. Wie in Fig. 2 dargestellt, befindet sich an der unteren Stirnseite des Gehäuses 4 ein Abschnitt für die Anschlussklemmen 7-1, 7-2, 7-3 die restliche Höhe H des Gehäuses 4 beträgt beispielsweise 161,5 mm. Damit weist bei dieser Ausführungsform der Gehäuseabschnitt für die Anschlussklemmen eine Breite von 185 minus 161,5 mm = 23,5 mm auf. An der Oberseite des Gehäuses 4 sind für die Anschlussklemmen 7-1, 7-2, 7-3 bei dem dargestellten Ausführungsbeispiel Arretierschrauben 9-1, 9-2, 9-3 vorgesehen.

Die Befestigungseinrichtungen 8 können jeweils eine Rasteinrichtung 10 aufweisen, beispielsweise in Form eines Haltestegs. Der Haltesteg kann entlang einer Querachse der Öffnung der Befestigungseinrichtung 8 verlaufen. Der Haltesteg kann dabei derart ausgebildet sein, dass ein Rastelement des zu befestigenden Installationsgerätes an diesem einrasten oder hinterrasten kann. Auf diese Weise kann das Installationsgerät in der Öffnung der Befestigungseinrichtung 8 einrasten und an dem Tragschienenadapter 1 befestigt werden. Die beiden Befestigungseinrichtungen 8 sind, wie in Fig. 2 dargestellt, symmetrisch zwischen den Kontakteinrichtungen 2-i angeordnet. Durch diese symmetrische Anordnung der Befestigungseinrichtungen 8 kann ein Installationsgerät auch um 180° gedreht auf den Tragschienenadapter 1 aufgesetzt und mittels der Befestigungseinrichtungen 8 befestigt werden.

Die Befestigungseinrichtungen 8 sind vorzugsweise, wie in dem Ausführungsbeispiel dargestellt, ebenfalls symmetrisch aufgebaut. Die Befestigungseinrichtungen 8 liegen, wie in Fig. 2 dargestellt, vorzugsweise an der Längsachse 5 des Gehäuses 4. Die Befestigungseinrichtungen 8 sind zusammen mit den Kontakteinrichtungen 2-i symmetrisch zu der gemeinsamen Längsachse 5 angeordnet. Das Gehäuse 4 des Tragschienenadapters 1 ist vorzugsweise aus einem isolierenden Material hergestellt. Beispielsweise besteht das Gehäuse 4 des Tragschienenadapters 1 aus einem isolierenden Kunststoff.

Die Kontakteinrichtungen 2-i sind, wie in Fig. 3 erkennbar, vorzugsweise als Steckkontakte ausgebildet und kontaktieren jeweils einen Innenleiter 11-i. Die drei Innenleiter 11-1, 11-2, 11-3 sind jeweils elektrisch leitend und verlaufen innerhalb des Gehäuses 4 hin zu zugehörigen Anschlussklemmen 7-1, 7-2, 7-3. Der erste Innenleiter 11-1 der ersten Kontakteinrichtung 2-1 ist mit der ersten Anschlussklemme 7-1 für eine Phasenleitung L1 verbunden. Der zweite Innenleiter 11-2 der zweiten Kontakteinrichtung 2-2 ist mit der Anschlussklemme 7-2 für eine zweite Phasenleitung L2 verbunden. Der dritte Innenleiter 11-3 ist mit der dritten Anschlussklemme 7-3 für die dritte Phasenleitung L3 verbunden. Mithilfe des Rastbauelementes 6 kann das Gehäuse 4 des Tragschienenadapters 1 auf die gestrichelt dargestellte Tragschiene 3 montiert bzw. aufgerastet werden. Dies geschieht mittels eines Ver- und Entriegelungsmechanismus. Ein Bediener kann nach Entfernen der externen Anschlussleitungen, beispielsweise Phasenleitugnen, von den Anschlussklemmen 7-i das Rastbauelement 6 mechanisch betätigen und auf diese Weise den Tragschienenadapter 1 von der Tragschiene 3 lösen. Wie man in Fig. 3 erkennen kann, ist das Gehäuse 4 des Tragschienenadapters 1 an der Unterseite des Gehäuses 4 auf der der oberen Stirnseite zugewandten Seite derart geformt, dass dort eine Gehäusenase 12 vorhanden ist, die ein Aufrasten auf die Tragschiene 3 erlaubt. Die gegenüberliegende Einrastnase 13 ist mechanisch durch Betätigen des Rastbauelementes 6 verschiebbar über einen Ver- und Entriegelungsmechanismus mit dem Rastbauelement 6 verbunden.

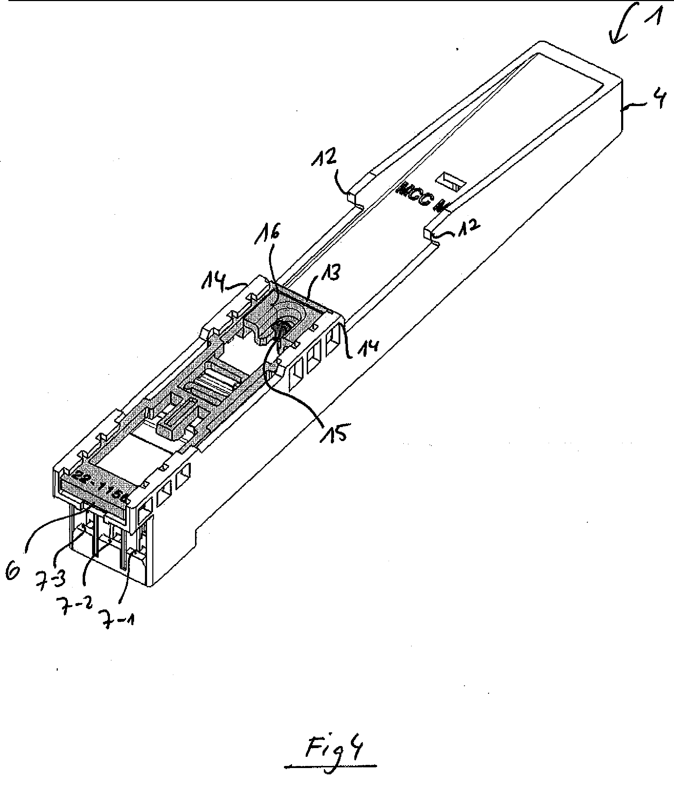

Fig. 4 zeigt eine Perspektivansicht eines Tragschienenadapters 1 gemäß einer Ausführungsform der Erfindung von unten. Man erkennt in Figur 4 den montierten Ver- bzw. Entriegelungsmechanismus der durch Betätigen des Rastelements 6 eine Einrastnase 13 zum Verrasten des Tragschienenadapters 1 auf einer Tragschiene 3 bewegt. Der Ver-und Entriegelungsmechanismus wird bei dem in Fig. 4 dargestellten Ausführungsbeispiel im aufmontierten Zustand an den Gehäusewandungen 14 des Gehäuses 4 gehalten. Bei dem in Fig. 4 dargestellten Ausführungsbeispiel ist an dem Adaptergehäuse 4 des Tragschienenadapters 1 zusätzlich ein hammerkopfförmiger Haltesteg 15 angeformt, der den Ver- und Entriegelungsmechanismus insbesondere bei einer starken mechanischen Belastung mechanisch hält. Hierzu ist der Ver- und Entriegelungsmechanismus mit einer in diesem Bereich vorzugsweise einseitig geöffneten Haltekontur 16 versehen. Bei der Montage des Ver- bzw. Entriegelungsmechanismus an den Tragschienenadapters 1 wird der Ver- bzw. Entriegelungsmechanismus von der geöffneten Seite her unter den Haltesteg 15 geschoben und bleibt in dieser Stellung. Während des Entriegelns und im Betriebszustand wird somit der Tragschienenadapter 1 stabil festgehalten, so dass das Gehäuse 4 des Tragschienenadapters 1 selbst bei extremer mechanischer Belastung nicht zerstört wird und es nicht möglich ist, den Tragschienenadapter 1 unbeabsichtigt von der Tragschiene 3 zu entfernen.

Die Erfindung schafft somit einen Tragschienenadapter 1 mit integrierten Kontakteinrichtungen 2-i, die vorzugsweise in dem elektrisch isolierenden Gehäuse 4 integriert sind. Die Anzahl der Kontakteinrichtungen kann bei anderen Ausführungsformen unterschiedlich sein. Beispielsweise ist es möglich, dass der Tragschienenadapter 1 auch nur zwei Kontakteinrichtungen 2-i aufweist. Weiterhin sind bei dem in den Figuren dargestellten Ausführungsbeispiel die Anschlussklemmen 7-i stirnseitig unten angeordnet. Bei alternativen Ausführungsformen können die Anschlussklemmen auch an einer anderen Stelle angeordnet sein, beispielsweise stirnseitig oben oder seitlich am Gehäuse 4.

### Bezugszeichenliste

- 1: Tragschienenadapter
- 2: Kontakteinrichtungen
- 3: Tragschiene
- 4: Gehäuse
- 5: Längsachse
- 6: Rastbauelement
- 7: Anschlussklemmen
- 8: Befestigungseinrichtungen
- 9: Arretierschrauben
- 10: Befestigungssteg
- 11: Innenleiter
- 12: Gehäusenase
- 13: Rastnase
- 14: Gehäusewand
- 15: Haltesteg
- 16: Haltekontur

## Patentansprüche

1. Tragschienenadapter (1) für ein elektrisches Installationsgerät,
wobei der Tragschienenadapter (1) ein Gehäuse (4) aufweist, an dessen Unterseite ein Rastbauelement (6) angebracht ist, welches mittels eines Ver- und Entriegelungsmechanismus zum Anbringen des Tragschienenadapters (1) an eine Tragschiene (3) oder zum Entfernen des Tragschienenadapters (1) von der Tragschiene (3) betätigbar ist, und an dessen Oberseite innen liegende Kontakteinrichtungen (2) zum Anschluss des elektrischen Installationsgerätes vorgesehen sind, welche über in dem Gehäuse (4) befindliche Innenleiter (11) mit Anschlussklemmen (7) verbunden sind, die an einer Stirnseite des Gehäuses (4) zum Anschluss von elektrischen Leitungen vorgesehen sind, wobei der Ver- und Entriegelungsmechanismus an der Stirnseite des Gehäuses (4) unterhalb der Anschlussklemmen (7) für die elektrischen Leitungen angebracht ist und nur nach Entfernen der elektrischen Leitungen betätigbar ist.

2. Tragschienenadapter nach Anspruch 1,
wobei die Kontakteinrichtungen (2) zum Anschluss des elektrischen Installationsgerätes Steckkontakte sind.

3. Tragschienenadapter nach einem der vorangehenden Ansprüche 1 bis 2,
wobei die Kontakteinrichtungen (2) zum Anschluss des elektrischen Installationsgerätes an der Oberseite des Gehäuses (4) linear übereinander angeordnet sind.

4. Tragschienenadapter nach einem der vorangehenden Ansprüche 1 bis 3,
wobei die stirnseitig angeordneten Anschlussklemmen (7) zum Anschluss von drei spannungsführenden Phasenleitungen (L1, L2, L3) vorgesehen sind.

5. Tragschienenadapter nach einem vorangegangen Ansprüche 1 bis 4,
wobei an dem Gehäuse (4) ein hammerkopfförmiger Haltesteg (15) zum Halten des Ver- und Entriegelungsmechanismus angeformt ist.

6. Tragschienenadapter nach Anspruch 5,
wobei der Ver- und Entriegelungsmechanismus mit einer Haltekontur (16) versehen ist, die unter den Haltesteg (15) des Gehäuses geschoben ist.

## Claims

1. Carrier rail adapter (1) for an electrical installation device,
wherein the carrier rail adapter (1) comprises a housing (4), to the lower face of which a latch component (6) is connected which is actuable by means of a locking and unlocking mechanism for connecting the carrier rail adapter (1) to a carrier rail (3) or for removing the carrier rail adapter (1) from the carrier rail (3), and on the upper face of which internally positioned contact means (2) for connecting the electrical installation device are provided, which are connected via internal conductors (11) located in the housing (4) to terminal clamps (7), which are provided on an end face of the housing (4) for connecting electrical lines, the locking and unlocking mechanism being connected to the end face of the housing (4) below the terminal clamps (7) for the electrical lines and only being actuable after the electrical lines are removed.

2. Carrier rail adapter according to claim 1,
wherein the contact means (2) for connecting the electrical installation device are plug-in contacts.

3. Carrier rail adapter according to either of the preceding claims 1 to 2,
wherein the contact means (2) for connecting the electrical installation device to the upper face of the housing (4) are arranged linearly above one another.

4. Carrier rail adapter according to any of the preceding claims 1 to 3,
wherein the terminal clamps (7) arranged on the end face are provided for connecting three live phasing lines (L1, L2, L3).

5. Carrier rail adapter according to any of the preceding claims 1 to 4,
wherein a hammerhead-shaped holding web (15) for holding the locking and unlocking mechanism is formed integrally on the housing (4).

6. Carrier rail adapter according to claim 5,
wherein the locking and unlocking mechanism is provided with a holding contour (16) which is slid under the holding web (15) of the housing.

## Revendications

1. Adaptateur pour rails porteurs (1) pour un appareil d'installation électrique,
dans lequel l'adaptateur pour rails porteurs (1) présente un boîtier (4), sur la partie inférieure duquel est monté un composant à encliqueter (6), qui est actionnable au moyen d'un mécanisme de verrouillage et de déverrouillage pour le montage de l'adaptateur pour rails porteurs (1) au niveau d'un rail porteur (3) ou pour le retrait de l'adaptateur pour rails porteurs (1) du rail porteur (3), et sur laquelle face supérieure des moyens de contact (2) disposés à l'intérieur sont prévus pour le raccordement de l'appareil d'installation électrique, qui sont reliés par l'intermédiaire de conducteurs intérieurs (11) disposé à l'intérieur du boîtier (4) avec des bornes de raccordement (7), lesquelles bornes étant prévues au niveau de la face frontale du boîtier (4) pour le raccordement de lignes électriques, dans lequel le mécanisme de verrouillage et de déverrouillage est monté au niveau de face frontale du boîtier (4) sous les bornes de raccordement (7) pour les lignes électriques et n'étant actionnable qu'après le retrait des lignes électriques.

2. Adaptateur pour rails porteurs selon la revendication 1, dans lequel les moyens de contact (2) pour le raccordement de l'appareil d'installation électrique sont des contacts enfichables.

3. Adaptateur pour rails porteurs selon l'une des revendications précédentes 1 à 2,
dans lequel les moyens de contact (2) pour le raccordement de l'appareil d'installation électrique sont disposés de manière linéaire les uns au-dessus des autres au niveau de la face supérieure du boîtier (4).

4. Adaptateur pour rails porteurs selon l'une des revendications précédentes 1 à 3,
dans lequel les bornes de raccordement (7) disposées sur la face frontale sont prévues pour le raccordement de trois lignes de phase (Ll, L2, L3) conductrices de tension.

5. Adaptateur pour rails porteurs selon l'une des revendications précédentes 1 à 4,
dans lequel une barre de retenue (15) en forme de tête de marteau est façonnée au niveau du boîtier (4) pour maintenir le mécanisme de verrouillage et de déverrouillage.

6. Adaptateur pour rails porteurs selon la revendication 5, dans lequel le mécanisme de verrouillage et de déverrouillage est doté d'un contour de maintien (16) qui est glissé sous la barre de retenue (15) du boîtier.
